# EUROPÄISCHE PATENTSCHRIFT

(11) **EP 1 257 073 B1**
(45) Veröffentlichungstag und Bekanntmachung des Hinweises auf die Patenterteilung: **20.09.2006**
(21) Anmeldenummer: 02009199.7
(22) Anmeldetag: 25.04.2002
(51) Int. Cl.: H04B 7/26, H04L 12/56, H04L 12/28

(54) **Verfahren zum Betreiben eines funkbasierten Kommunikationssystems**
Method for operating a radio communication system
Méthode pour faire fonctionner un système de communications radio

(30) Priorität: 07.05.2001 DE 10122099
(43) Veröffentlichungstag der Anmeldung: 13.11.2002
(73) Patentinhaber: ALCATEL, 75008 Paris (FR)
(72) Erfinder: Jeschke, Michael, Dipl.-Ing., 70197 Stuttgart (DE)
(74) Vertreter: Rausch, Gabriele

(56) Entgegenhaltungen:
- US-A- 5 995 500

## Beschreibung

Die Erfindung geht aus von einem Verfahren zum Betreiben eines funkbasierten Kommunikationssystems entsprechend dem Oberbegriff des Anspruchs 1. Weiterhin betrifft die Erfindung ein entsprechendes funkbasiertes Kommunikationssystem und eine entsprechende Mobilstation hierfür.

Ein derartiges Verfahren ist von dem CDMA-Kommunikationssystem (CDMA = code division multiple access) bekannt. Dort ist bei Verwendung des TDD-Verfahrens (TDD = time division duplex) vorgesehen, dass eine Mobilstation während eines sogenannten Uplink-Zeitschlitzes Daten an eine Basisstation senden darf, während eines sogenannten Downlink-Zeitschlitzes jedoch keine Daten senden darf, sondern nur Daten von der Basisstation empfangen kann. Mit Hilfe eines Codes werden dabei die zu unterschiedlichen Mobilstationen zugehörigen Daten voneinander unterschieden.

Bei einem derartigen Kommunikationssystem ist eine Kommunikation zwischen zwei Mobilstationen nur über die Basisstation möglich. Eine direkte Kommunikation ist nicht möglich.

Aufgabe der Erfindung ist es, ein Verfahren der eingangs genannten Art zu schaffen, mit dem eine direkte Kommunikation zwischen zwei Mobilstationen ohne die Zwischenschaltung der zugehörigen Basisstation möglich ist.

Diese Aufgabe wird durch das Verfahren nach dem Anspruch 1 gelöst. Ebenfalls wird die Aufgabe durch die Mobilstation nach dem Anspruch 7 sowie durch das Kommunikationssystem nach dem Anspruch 8 gelöst.

Erfindungsgemäß sendet die erste Mobilstation Daten während des Uplink-Zeitschlitzes, und zwar nicht mit dem normalen Code, sondern mit dem speziellen Code. Diese Daten mit dem speziellen Code werden von der zweiten Mobilstation in dem Uplink-Zeitschlitz empfangen. Anhand des speziellen Codes kann die zweite Mobilstation für sie bestimmte Daten von solchen unterschieden, die für die Basisstation bestimmt sind. Auf diese Weise entsteht eine direkte Kommunikation zwischen den beiden Mobilstation, und zwar mit dem speziellen Code.

Da der spezielle Code nicht für Daten verwendet wird, die für die Basisstation bestimmt sind, ignoriert die Basisstation diese Daten.

Bei einer vorteilhaften Weiterbildung der Erfindung antwortet die zweite Mobilstation in einem nächsten Uplink-Zeitschlitz der ersten Mobilstation. Hierzu sendet die zweite Mobilstation Daten wiederum mit dem speziellen Code. Daran kann die erste Mobilstation erkennen, dass diese Daten von der zweiten Mobilstation stammen. Insgesamt entsteht somit eine direkte Kommunikation zwischen den beiden Mobilstationen, ohne dass hierzu die Zwischenschaltung der Basisstation erforderlich ist.

Die beschriebene direkte Kommunikation zwischen zwei Mobilstationen ist dabei ohne jegliche zusätzliche Hardware möglich. Gleichzeitig stellt die genannte direkte Kommunikation eine Funktion dar, die von vielen Benutzern von Kommunikationssystemen erwünscht ist und deshalb von den Betreibern der Kommunikationssysteme werbewirksam einsetzbar ist.

Zur Unterscheidung derjenigen Daten, die zwischen der Basisstation und den Mobilteilen ausgetauscht werden, und denjenigen Daten, die bei der direkten Kommunikation zwischen zwei Mobilteilen ausgetauscht werden, ist erfindungsgemäß vorgesehen, dass in beiden Fällen jeweils unterschiedliche Codes zur Übertragung der Daten benutzt werden.

Besonders zweckmäßig ist es dabei, wenn die Codes für die direkte Kommunikation zwischen zwei Mobilteilen von der Basisstation zur Verfügung gestellt werden. Damit wird erreicht, dass die direkte Kommunikation - wenn überhaupt - nur in einem geringen Umfang zu Störungen des Empfangs der Basisstation führen kann.

Bei einer weiteren vorteilhaften Ausbildung der Erfindung wird das Aussenden von Daten mit dem speziellen Code mit einer verminderten Sendeleistung vorgenommen. Damit wird einerseits gewährleistet, dass die während des Uplink-Zeitschlitzes von einer der Mobilstationen mit dem speziellen Code ausgesendeten Daten nicht zu Störungen der an sich in diesem Uplink-Zeitschlitz von anderen Mobilstationen mit dem normalen Code an die Basisstation ausgesendeten Daten führt. Andererseits wird mit Hilfe der verminderten Sendeleistung jedoch trotzdem erreicht, dass zwei Mobilstationen, die sich in räumlicher Nähe zueinander befinden, miteinander kommunizieren können.

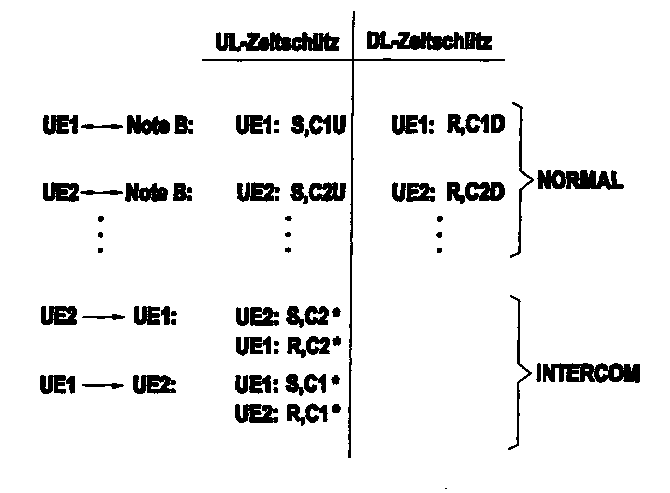

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind.

Die einzige Figur der Zeichnung zeigt eine schematische Darstellung eines Ausführungsbeispiels eines erfindungsgemäßen Verfahrens zum Betreiben eines funkbasierten Kommunikationssystems.

Bei einem CDMA-Kommunikationssystem (CDMA = code division multiple access) ist eine Basisstation vorhanden, die auch als Node B bezeichnet wird. Diese Basisstation deckt einen bestimmten örtlichen Bereich ab, in dem sie mit einer Mehrzahl von Mobilstationen kommunizieren kann. Die Mobilstationen werden auch als UEs bezeichnet (UE = user equipment).

Die Kommunikation zwischen der Basisstation und den Mobilstationen erfolgt im Zeitduplex-Verfahren (TDD = time division duplex). Dies bedeutet, dass die Frequenz, mit der Informationen von der Basisstation an die Mobilstationen übertragen werden (sogenannter downlink = DL) identisch ist mit der Frequenz, mit der Informationen von den Mobilstationen an die Basisstation übertragen werden (sogenannter uplink = UL). Die Unterscheidung zwischen den beiden Übertragungsrichtungen, also zwischen dem Uplink und dem Downlink, erfolgt mit Hilfe von unterschiedlichen Zeitschlitzen, die von dem Zeitduplex-Verfahren zur Verfügung gestellt werden. Dabei sind aufeinanderfolgende Zeitschlitze für das Uplink und das Downlink vorgesehen.

So darf die Basisstation nur während der Zeitschlitze für das Downlink Informationen an die Mobilstationen aussenden. Während dieser Downlink-Zeitschlitze dürfen die Mobilstationen keine Informationen an die Basisstation senden, sondern hier dürfen sie nur die von der Basisstation gesendeten Informationen empfangen. Entsprechendes gilt auch umgekehrt für die Zeitschlitze für das Uplink. In diesen Zeitschlitzen dürfen nur die Mobilstationen Informationen senden, die von der Basisstation dann empfangen werden. Die Basisstation darf jedoch in diesem Zeitschlitz keine Informationen senden.

Bei dem beschriebenen Verfahren werden die zu übertragenden Informationen mit bestimmten Codes übertragen. Diese Codes unterscheiden sich dabei in Abhängigkeit von der jeweiligen Mobilstation und von der Übertragungsrichtung. So verwendet beispielsweise im Uplink jede Mobilstation, die zur Basisstation Informationen sendet, einen eigenen Code, der zuvor z.B. von der Basisstation zugeteilt wurde. Die vorgenannten Codes werden nachfolgend als normale Codes bezeichnet.

Diese Verfahren und Zuordnungen sind in der Figur schematisch dargestellt. In einem als NORMAL gekennzeichneten Modus kommunizieren eine erste Mobilstation UE1 und eine zweite Mobilstation UE2 mit einer gemeinsamen Basisstation Node B. Während des Uplinks UL sendet (S = to send) die erste Mobilstation UE1 Daten mit einem normalen Code C1U an die Basisstation Node B.

Gleichzeitig sendet die zweite Mobilstation UE2 Daten mit einem normalen Code C2U an dieselbe Basisstation Node B. Während des Downlinks DL empfängt (R = to receive) die erste Mobilstation UE1 Daten von der Basisstation Node B mit dem normalen Code C1D und die zweite Mobilstation UE2 empfängt Daten von der Basisstation mit dem normalen Code C2D. Auf diese Weise kann mit Hilfe der normalen Codes C1U, C2U, C1D, C2D und mit Hilfe der Unterscheidung zwischen Uplink und Downlink ein voneinander unabhängiger Austausch von Daten zwischen der ersten Mobilstation UE1 und der Basisstation Node B und zwischen der zweiten Mobilstation UE2 und der Basisstation Node B erfolgen. Es versteht sich, dass diese Kommunikation auch noch auf weitere Mobilstationen in entsprechender Weise ausgeweitet werden kann.

In einem als INTERCOM bezeichneten Modus ist eine direkte Kommunikation zwischen den beiden Mobilstationen UE1 und UE2 ohne Zwischenschaltung der Basisstation Node B möglich. Es wird nachfolgend davon ausgegangen, dass die zweite Mobilstation UE2 eine derartige direkte Kommunikation mit der ersten Mobilstation UE1 beginnen will. Weiterhin wird davon ausgegangen, dass die erste Mobilstation UE1 auf einen sogenannten Intercom-Receive-Mode eingestellt ist, der noch näher erläutert werden wird.

Zum Starten einer direkten Kommunikation zwischen zwei Mobilstationen sendet die zweite Mobilstation UE2 während des Uplink Daten aus (siehe Figur: UE2 -> UE1: S während UL). Zum Senden dieser Daten wird ein Code C2* verwendet, bei dem es sich um einen speziellen Code handelt, der sich von den bereits erläuterten normalen Codes C1U, C2U, usw. unterscheidet. Weiterhin werden die Daten mit dem Code C2* mit einer wesentlich geringeren Sendeleistung von der Mobilstation UE2 ausgesendet, wie dies an sich in dem als NORMAL bezeichneten Modus der Fall wäre, so dass die Basissatation möglichst wenig gestört wird.

Da die erste Mobilstation UE1 auf den Intercom-Receive-Mode eingestellt ist, ist sie in der Lage, entgegen dem als NORMAL bezeichneten Modus, Daten auch während des Uplink zu empfangen. Die erste Mobilstation UE1 empfängt deshalb - sofern sie sich in räumlicher Nähe zu der zweiten Mobilstation UE2 befindet - die von der zweiten Mobilstation UE2 ausgesendeten Daten (siehe Figur: UE2 -> UE1: R während UL). Aufgrund des speziellen Codes C2* erkennt die erste Mobilstation UE1, dass es sich bei den Daten um solche handelt, die einer direkten Kommunikation zwischen zwei Mobilstationen zugeordnet sind, und nicht um solche, die für die Basisstation bestimmt sind.

Die Basisstation Node B ihrerseits hat keinen auf den speziellen Code C2* angepaßten Empfänger konfiguriert. Die Basisstation Node B ignoriert deshalb die zugehörigen Daten. Da diese Daten außerdem nur mit einer sehr geringen Sendeleistung von der zweiten Mobilstation UE2 ausgestrahlt werden, stören sie auch kaum den übrigen Empfang von Daten in der Basisstation Node B.

Während des nächsten Uplink sendet die Mobilstation UE1 als Antwort Daten mit einem speziellen Code C1* und mit einer wesentlich verminderten Sendeleistung aus (siehe Figur: UE1 -> UE2: S während UL).

Die Basisstation Node B ist während des Uplinks auf das Empfangen von Daten von den Mobilstationen UE1, UE2 eingestellt und könnte deshalb gegebenenfalls die von der ersten Mobilstation UE1 ausgesendeten Daten trotz ihrer geringen Sendeleistung empfangen. Die Basisstation Node B hat jedoch keinen auf den speziellen Code C1* angepaßten Empfänger konfiguriert, so daß die Daten von der Basisstation Node B wiederum ignoriert werden.

Die zweite Mobilstation UE2, die die direkte Kommunikation wie beschrieben initiiert hat, und die deshalb eine Antwort von der ersten Mobilstation UE1 erwartet, schaltet nun - entgegen dem als NORMAL gekennzeichneten Modus - während des Uplinks auf den Empfang von Daten (siehe Figur: UE1 -> UE2: R während UL). Insoweit schaltet auch die zweite Mobilstation UE2 in den Intercom-Receive-Mode, und zwar automatisch aufgrund der von ihr initiierten direkten Kommunikation. Sofern sich die zweite Mobilstation UE2 in räumlicher Nähe zu der ersten Mobilstation UE1 befindet, empfängt die zweite Mobilstation UE2 die von der ersten Mobilstation UE1 während des Uplink ausgesendeten Daten trotz ihrer geringeren Sendeleistung. Anhand des speziellen Codes C1* erkennt die zweite Mobilstation UE2, dass es sich um diejenigen Daten handelt, die zu der von ihr selbst initiierten direkten Kommunikation mit der ersten Mobilstation UE1 gehören.

Danach kann die zweite Mobilstation UE2 weitere Daten zusammen mit dem speziellen Code C2* an die erste Mobilstation UE1 senden, wie dies im Zusammenhang mit dem Starten der direkten Kommunikation bereits erläutert worden ist. Die direkte Kommunikation kann dann in dieser Weise beliebig fortgesetzt werden.

Voraussetzung für die direkte Kommunikation zwischen den beiden Mobilstationen UE1 und UE2 ist, dass sich dieselben in räumlicher Nähe zueinander befinden, so dass die von einer der beiden Mobilstationen mit der verminderten Sendeleistung ausgesendeten Daten von der anderen Mobilstation empfangen werden können.

Weiterhin muss für die direkte Kommunikation ein spezieller Code verwendet werden, der sich von dem ansonsten verwendeten Code unterscheidet. Dies kann dadurch erreicht werden, dass ein Satz von speziellen Codes in dem Kommunikationssystem vorhanden ist, der nur für diese direkte Kommunikation vorgesehen ist, und der ansonsten nicht verwendet wird. Ebenfalls kann dies dadurch erreicht werden, dass die Basisstation beispielsweise über einen sogenannten Broadcast-Kanal allen vorhandenen Mobilstationen immer wieder diejenigen Codes übermittelt, die von den Mobilstationen als spezielle Codes für die direkte Kommunikation verwendet werden können.

Wie erläutert wurde, muss sich die erste Mobilstation UE1 bereits in einem Intercom-Receive-Mode befinden, wenn die zweite Mobilstation UE2 die direkte Kommunikation zwischen den beiden Mobilstationen startet. Dies kann auf unterschiedliche Weisen erfolgen.

Es ist möglich, dass der Benutzer der ersten Mobilstation UE1 manuell den Intercom-Receive-Mode an seiner Mobilstation einstellt, z.B. durch eine entsprechende Programmierung oder durch einen hierfür vorgesehenen Schalter.

Ebenfalls ist es möglich, dass die zweite Mobilstation UE2 vor dem Starten der eigentlichen direkten Kommunikation einen speziellen Access-Code CA* in dem vorhergehenden Downlink-Zeitschlitz DL aussendet. Da die erste Mobilstation UE1 im Downlink-Zeitschlitz DL in dem als NORMAL gekennzeichneten Modus auf das Empfangen von Daten eingestellt ist, empfängt sie diesen speziellen Access-Code CA*. Anhand des speziellen Access-Codes CA* erkennt die erste Mobilstation UE1, dass eine andere Mobilstation eine direkte Kommunikation starten will. Die erste Mobilstation UE1 schaltet daraufhin automatisch in den Intercom-Receive-Mode, so dass dann die zweite Mobilstation UE2 die direkte Kommunikation - wie beschrieben - starten kann.

Die Verwendung des Access-Codes CA* ist auch dann möglich, wenn dieser im Uplink-Zeitschlitz UL zur Anwendung kommt. Die erste Mobilstation UE1 muß dann zwar manuell in den Intercom-Receive-Mode gestellt werden, aber sie muß nicht auf allen erdenklichen Codes C2* "hören" bzw. korrelieren., um herauszufinden, ob die zweite Mobilstation UE2 mit ihr kommunizieren will. Statt dessen "hört" die erste Mobilstation UE1 nur auf einem begrenzten Satz von Access-Codes CA*1, CA*2, ..., CA*n, und antwortet dann mit ebenfalls in einem Uplink-Zeitschlitz UL mit einem Code CR*, der von dem empfangenen Code CA* abhängt. Als Spezialfall kann sich dabei ergeben, daß die Codes C1* und C2* identisch sind.

## Patentansprüche

1. Verfahren zum Betreiben eines funkbasierten Kommunikationssystems, bei dem während eines ersten Zeitschlitzes (UL) das Senden von Daten von einer ersten Mobilstation (UE1) an eine Basisstation (Node B) vorgesehen ist, bei dem während eines zweiten Zeitschlitzes (DL) das Empfangen von Daten von der Basisstation (Node B) in der ersten Mobilstation (UE1) vorgesehen ist, bei dem für einen Austausch von Daten die ersten und zweiten Zeitschlitze (UL, DL) aufeinanderfolgend vorgesehen sind, und bei dem den auf diese Weise zwischen der ersten Mobilstation (UE1) und der Basisstation (Node B) ausgetauschten Daten normale Codes (C1U, C1D) zugeordnet sind, **dadurch gekennzeichnet, dass** eine zweite Mobilstation (UE2) in dem ersten Zeitschlitz (UL) Daten mit einem speziellen Code (C2*) sendet, und dass die erste Mobilstation (UE1) die Daten mit dem speziellen Code (C2*) in dem ersten Zeitschlitz (UL) empfängt.

2. Verfahren nach Anspruch 1, **dadurch gekennzeichnet, dass** die erste Mobilstation (UE1) in einem nachfolgenden ersten Zeitschlitz (UL) Daten mit dem speziellen Code (C1*) sendet, und dass die zweite Mobilstation (UE2) die Daten mit dem speziellen Code (C1*) in dem ersten Zeitschlitz (UL) empfängt.

3. Verfahren nach einem der vorstehenden Ansprüche, **dadurch gekennzeichnet, dass** die erste und/oder die zweite Mobilstation (UE1, UE2) in einen Modus geschaltet wird, in dem sie in dem ersten Zeitschlitz (UL) Daten empfangen kann/können (Intercom-Receive-Mode).

4. Verfahren nach einem der vorstehenden Ansprüche, **dadurch gekennzeichnet, dass** der spezielle Code (C1*, C2*) unterschiedlich zu dem normalen Code (C1U, C2U, C1D, C2D) gewählt wird.

5. Verfahren nach einem der vorstehenden Ansprüche, **dadurch gekennzeichnet, dass** der spezielle Code (C1*, C2*) von der Basisstation (Node B) den Mobilstationen (UE1, UE2) zur Verfügung gestellt wird.

6. Verfahren nach einem der vorstehenden Ansprüche, **dadurch gekennzeichnet, dass** das Aussenden der Daten mit dem speziellen Code (C1*, C2*) mit einer verminderten Sendeleistung vorgenommen wird.

7. Mobilstation (UE2) für ein funkbasiertes Kommunikationssystem, bei dem während eines ersten Zeitschlitzes (UL) das Senden von Daten an eine Basisstation (Node B) vorgesehen ist, bei dem während eines zweiten Zeitschlitzes (DL) das Empfangen von Daten von der Basisstation (Node B) vorgesehen ist, bei dem für einen Austausch von Daten die ersten und zweiten Zeitschlitze (DL, UL) aufeinanderfolgend vorgesehen sind, und bei dem den auf diese Weise zwischen der Mobilstation (UE2) und der Basisstation (Node B) ausgetauschten Daten normale Codes (C2U, C2D) zugeordnet sind, **dadurch gekennzeichnet, dass** die Mobilstation (UE2) zum Senden von Daten mit einem speziellen Code (C2*) in dem ersten Zeitschlitz (UL) vorgesehen ist, wobei die Daten mit dem speziellen Code (C2*) von einer anderen Mobilstation (UE1) in dem ersten Zeitschlitz (UL) empfangen werden können.

8. Funkbasiertes Kommunikationssystem, bei dem während eines ersten Zeitschlitzes (UL) das Senden von Daten von einer ersten Mobilstation (UE1) an eine Basisstation (Node B) vorgesehen ist, bei dem während eines zweiten Zeitschlitzes (DL) das Empfangen von Daten von der Basisstation (Node B) in der ersten Mobilstation (UE1) vorgesehen ist, bei dem für einen Austausch von Daten die ersten und zweiten Zeitschlitze ((DL, UL) aufeinanderfolgend vorhanden sind, und bei dem den auf diese Weise zwischen der ersten Mobilstation (UE1) und der Basisstation (Node B) ausgetauschten Daten normale Codes (C1U, C1D) zugeordnet ist, **dadurch gekennzeichnet, dass** eine zweite Mobilstation (UE2) zum Senden von Daten mit einem speziellen Code (C2*) in dem ersten Zeitschlitz (UL) vorgesehen ist, und dass die erste Mobilstation (UE1) zum Empfangen der Daten mit dem speziellen Code (C2*) in dem ersten Zeitschlitz (UL) vorgesehen ist.

## Claims

1. Method for operating a radio communication system, in which during a first time slot (UL) the sending of data from a first mobile station (UE1) to a base station (Node B) is provided, in which during a second time slot (DL) the receiving of data from the base station (Node B) into the first mobile station (UE1) is provided, in which for an exchange of data the first and second time slots (UL, DL) are provided as successive, and in which the data exchanged in this way between the first mobile station (UE1) and the base station (Node B) is assigned normal codes (C1U, C1D), **characterized in that** a second mobile station (UE2) sends data with a special code (C2*) in the first time slot (UL), and that the first mobile station (UE1) receives the data with the special code (C2*) in the first time slot (UL).

2. Method according to Claim 1, **characterized in that** the first mobile station (UE1) sends data with the special code (C1*) in a subsequent first time slot (UL), and that the second mobile station (UE2) receives the data with the special code (C1*) in the first time slot (UL).

3. Method according to one of the preceding claims, **characterized in that** the first and/or the second mobile station (UE1, UE2) is switched into a mode (intercom receive mode) in which it can receive data in the first time slot (UL).

4. Method according to one of the preceding claims, **characterized in that** the special code (C1*, C2*) is chosen to be different from the normal code (C1U, C2U, C1D, C2D).

5. Method according to one of the preceding claims, **characterized in that** the special code (C1*, C2*) is supplied to the mobile stations (UE1, UE2) by the base station (Node B).

6. Method according to one of the preceding claims, **characterized in that** the data with the special code (C1*, C2*) is sent with a reduced transmit power.

7. Mobile station (UE2) for a radio communication system, in which during a first time slot (UL) the sending of data to a base station (Node B) is provided, in which during a second time slot (DL) the receiving of data from the base station (Node B) is provided, in which for an exchange of data the first and second time slots (DL, UL) are provided as successive, and in which the data exchanged in this way between the mobile station (UE2) and the base station (Node B) is assigned normal codes (C2U, C2D), **characterized in that** the mobile station (UE2) is provided with a special code (C2*) for the sending of data in the first time slot (UL), another mobile station (UE1) being able to receive the data with the special code (C2*) in the first time slot (UL).

8. Radio communication system, in which during a first time slot (UL) the sending of data from a first mobile station (UE1) to a base station (Node B) is provided, in which during a second time slot (DL) the receiving of data from the base station (Node B) into the first mobile station (UE1) is provided, in which for an exchange of data the first and second time slots ((DL, UL) are successively present, and in which the data exchanged in this way between the first mobile station (UE1) and the base station (Node B) is assigned normal codes (C1U, C1D), **characterized in that** a second mobile station (UE2) is provided with a special code (C2*) for the sending of data in the first time slot (UL), and that the first mobile station (UE1) is provided with the special code (C2*) for receiving the data in the first time slot (UL).

## Revendications

1. Procédé pour l'exploitation d'un système de communications radio dans lequel l'envoi de données depuis une première station mobile (UE1) vers une station de base (Node B) est prévu pendant un premier créneau de temps (UL), dans lequel la réception de données de la station de base (Node B) dans la première station mobile (UE1) est prévue pendant un deuxième créneau de temps (DL), dans lequel le premier et le deuxième créneaux de temps (UL, DL) sont prévus l'un après l'autre pour un échange de données, et dans lequel des codes normaux (C1U, C1D) sont attribués aux données échangées de cette manière entre la première station mobile (UE1) et la station de base (Node B), **caractérisé en ce qu'**une deuxième station mobile (UE2) envoie des données avec un code spécial (C2*) dans le premier créneau de temps (UL) et **en ce que** la première station mobile (UE1) reçoit les données avec le code spécial (C2*) dans le premier créneau de temps (UL).

2. Procédé selon la revendication 1, **caractérisé en ce que** la première station mobile (UE1) envoie des données avec un code spécial (C1*) dans un premier créneau de temps (UL) suivant, et **en ce que** la deuxième station mobile (UE2) reçoit les données avec le code spécial (C1*) dans le premier créneau de temps (UL).

3. Procédé selon l'une quelconque des revendications précédentes, **caractérisé en ce que** la première et/ou la deuxième stations de base (UE1, UE2) sont commutées sur un mode (mode de réception Intercom) dans lequel elles peuvent recevoir des données dans le premier créneau de temps (UL).

4. Procédé selon l'une quelconque des revendications précédentes, **caractérisé en ce que** le code spécial (C1*, C2*) est choisi pour être différent du code normal (C1U, C2U, C1D, C2D).

5. Procédé selon l'une quelconque des revendications précédentes, **caractérisé en ce que** le code spécial (C1*, C2*) est mis à disposition par la station de base (Node B) aux stations mobiles (UE1, UE2).

6. Procédé selon l'une quelconque des revendications précédentes, **caractérisé en ce que** l'émission des données avec le code spécial (C1*, C2*) est effectuée avec une puissance d'émission réduite.

7. Station mobile (UE2) pour un système de communications radio dans lequel l'envoi de données à une station de base (Node B) est prévu pendant un premier créneau de temps (UL), dans lequel la réception de données de la station de base (Node B) est prévue pendant un deuxième créneau de temps (DL), dans lequel le premier et le deuxième créneaux de temps (UL, DL) sont prévus l'un après l'autre pour un échange de données, et dans lequel des codes normaux (C2U, C2D) sont attribués aux données échangées de cette manière entre la station mobile (UE2) et la station de base (Node B), **caractérisé en ce que** la station mobile (UE2) est prévue pour l'envoi de données avec un code spécial (C2*) dans le premier créneau de temps (UL), les données avec le code spécial (C2*) pouvant être reçues par une autre station mobile (UE1) dans le premier créneau de temps (UL).

8. Système de communications radio dans lequel l'envoi de données depuis une première station mobile (UE1) à une station de base (Node B) est prévu pendant un premier créneau de temps (UL), dans lequel la réception de données de la station de base (Node B) dans la première station mobile (UE1) est prévue pendant un deuxième créneau de temps (DL), dans lequel le premier et le deuxième créneaux de temps (UL, DL) sont prévus l'un après l'autre pour un échange de données, et dans lequel des codes normaux (C1U, C1D) sont attribués aux données échangées de cette manière entre la première station mobile (UE1) et la station de base (Node B), **caractérisé en ce qu'**une deuxième station mobile (UE2) est prévue pour envoyer des données avec un code spécial (C2*) dans le premier créneau de temps (UL), et **en ce que** la première station mobile (UE1) est prévue pour recevoir les données avec le code spécial (C2*) dans le premier créneau de temps (UL).
